Europäisches Patentamt

European Patent Office

Office européen des brevets

(11) Veröffentlichungsnummer: **0 224 889**
A2

## (12) EUROPÄISCHE PATENTANMELDUNG

(21) Anmeldenummer: 86116581.9

(22) Anmeldetag: 28.11.86

(51) Int. Cl.⁴: **B 01 D 53/00**

(30) Priorität: 29.11.85 DE 3542345

(43) Veröffentlichungstag der Anmeldung:
10.06.87 Patentblatt 87/24

(84) Benannte Vertragsstaaten:
AT BE CH DE FR GB IT LI LU NL SE

(71) Anmelder: Imhausen-Chemie Gesellschaft mit
beschränkter Haftung
Kaiserstrasse 95
D-7630 Lahr(DE)

(72) Erfinder: Kleis, Gustav
Kiefernweg 9,
D-7630 Lahr-Kuhbach(DE)

(72) Erfinder: Renner, Hans Joachim Dr.
Kiefernweg 7,
D-7630 Lahr-Kuhbach(DE)

(72) Erfinder: Schelchshorn, Joachim Dr.
Merzengasse 11,
D-7630 Lahr(DE)

(74) Vertreter: Glawe, Delfs, Moll & Partner Patentanwälte
Postfach 26 01 62 Liebherrstrasse 20
D-8000 München 26(DE)

(54) Verfahren zum Entfernen von Schwefelwasserstoff aus Abgas.

(57) Zur Abtrennung von Schwefelwasserstoff aus Abgas wird das Abgas einem biologischen Reaktor, in welchem Mikroorganismen suspendiert oder auf einem Festbett vorhanden sind, zugeführt. Durch gleichzeitige Zuführung von Sauerstoff in einer Menge, die größer ist als die Sauerstoffmenge, die zur Oxidation des im Abgas enthaltenen Schwefelwasserstoffs zu elementarem Schwefel nötig ist, wird erreicht, daß als Ergebnis des Stoffwechselvorgangs der Mikroorganismen elementarer Schwefel oder eine in Wasser leicht lösliche Schwefel-Sauerstoff-Verbindung entsteht. Dieses Produkt kann leicht mittels Flüssigkeit aus dem Reaktor ausgetragen werden.

FIG. 1

**0224889**

– 1 –

Imhausen-Chemie GmbH
D-7630 Lahr/Schwarzwald                    WM/dl

B e s c h r e i b u n g

Verfahren zum Entfernen von Schwefelwasserstoff aus Abgas

Die Erfindung betrifft ein Verfahren zum Entfernen von Schwefelwasserstoff aus Abgas, insbesondere aus einem von anaeroben Prozessen stammenden Faulgas oder Biogas, bei dem das Abgas durch einen biologischen Reaktor geleitet und der Schwefelwasserstoff durch die Stoffwechseltätigkeit von in dem Reaktor vorhandenen Mikroorganismen umgesetzt wird.

Schwefelwasserstoff tritt häufig als Beimengung von Abgasen auf, beispielsweise in Kokereigas, Erdgas, Biogas und in Abgasströmen spezifischer Industrien. Die Entfernung von Schwefelwasserstoff aus Abgasen ist nicht nur wegen seiner Toxizität und Geruchsentwicklung erwünscht, sondern überall dort geboten, wo das Abgas einer Verbrennung zugeführt wird, da im Verbrennungsprozeß aus Schwefelwasserstoff

- 2 -

Schwefeldioxid gebildet wird, welches korrosive Eigenschaften hat und bekanntlich eine starke Umweltbelastung darstellt.

Zur Reinigung von $H_2S$-haltigen Gasgemischen sind chemisch-physikalische Verfahren bekannt. So kann Schwefelwasserstoff durch eine Waschlösung absorptiv aus dem Gasstrom entfernt und nach Regeneration der Waschlösung auf chemischem Weg - teilweise unter Einsatz von Katalysatoren - zu elementarem Schwefel umgewandelt werden. Aus DE-PS 28 51 802 ist es bekannt, das Abgas mit durch einen Schwefelbrenner erzeugtem Schwefeldioxid zusammenzubringen, welches mit dem im Abgas enthaltenen Schwefelwasserstoff unter Bildung von elementarem Schwefel reagiert. Aus der DE-OS 33 31 189 ist ein Verfahren bekannt, bei dem Faulgas aus einer Kläranlage durch eine Reinigungsmasse geleitet wird, die Eisenoxid enthält, welches mit dem Schwefelwasserstoff des Faulgases unter Bildung von Eisensulfid und Wasser reagiert. Zur Regenerierung der Reinigungsmasse wird dem Faulgas Luft zudosiert, deren Sauerstoff das Eisensulfid wieder zu Eisenoxid oxidiert, wobei elementarer Schwefel freigesetzt wird.

- 3 -

Neben den vorgenannten, rein chemisch arbeitenden Verfahren sind zur Reinigung von Abgasen
allgemein biologische Verfahren bekannt, bei
denen das Abgas durch einen biologischen Reaktor
geleitet wird, in welchem das Abgas entweder mit
einer Mikroorganismen enthaltenden Flüssigkeit
zusammengebracht wird (Biowäscher) oder ein mit
den Mikroorganismen besiedeltes Festbett durchströmt (Biofilter). Solche biologischen Abgasreinigungsverfahren sind insbesondere aus den
folgenden Druckschriften bekannt:

DE-OS 24 45 315:
Die Abgase durchströmen ein Kompostfilter, welches die abzutrennenden Verunreinigungen adsorbiert. Verbrauchtes Kompostmaterial, dessen
Adsorptionsfähigkeit erschöpft ist, wird aus dem
Filter ausgetragen.

DE-OS 33 22 688:
Abgase, die auch Schwefelwasserstoff enthalten
können, werden durch ein biologisches Filter,
insbesondere ein Kompostfilter geleitet, wobei
dem Abgas zusätzlich leicht abbaubare organische
Substanzen zudosiert werden können; um auch
halogenierte Verunreinigungen abtrennen zu können,
wird der Biomasse ein Penicillium-Konzentrat zugegeben.

DE-OS 32 17 923:
Das Abgas wird durch ein Füllkörperbett geleitet,
das mit Waschwasser berieselt wird. Die Füllkörper sind mit Mikroorganismen besiedelt, die die
vom Waschwasser aus dem Abgas absorbierten Verunreinigungen biologisch abbauen, so daß das aus dem Füllkörperbett austretende Waschwasser frei von Verunreinigungen ist und die Verunreinigungen bzw. ihre Abbauprodukte im Füllkörperbett verbleiben.

DE-OS 33 41 374:

Abgas, insbesondere Abluft von Kläranlagenreaktoren, wird zuerst durch ein mit Waschwasser berieseltes Waschfilter und anschließend durch ein mit Mikroorganismen besiedeltes biologisches Filter geleitet.

DE-OS 33 45 944:

Abgas wird durch ein biologisches Filter, bestehend aus einem mit Bakterien besiedelten, adsorptiven Trägermaterial geleitet und die Bakterien gleichzeitig durch einen Flüssigkeitsstrom benetzt. Die eigentliche Abscheidung der Verunreinigungen aus dem Abgas erfolgt durch Adsorption an dem adsorptiven Trägermaterial. Der anschließende Abbau der adsorbierten Verunreinigungen durch die Mikroorganismen bewirkt eine Regenerierung der Adsorptionsoberfläche des Trägermaterials.

DE-OS 34 28 798:

Aus einem Abwasserklärbecken entweichende Abgase, die auch Schwefelverbindungen enthalten können, durchströmen ein das Becken überdeckendes biologisches Filter aus offenporigen Stoffen, deren Poren mit Mikroorganismen besiedelt sind.

Wenn derartige biologische Verfahren zur Abtrennung von Schwefelwasserstoff aus Abgas verwendet werden, dann ergibt sich das Problem, daß das von den Mikroorganismen gebildete schwefelhaltige Abbauprodukt, z.B. Sulfat, im biologischen Filter verbleibt und mit der Zeit, insbesondere durch Absinken des pH-Wertes, die biologische Wirksamkeit und Lebensfähigkeit der Mikroorganismen beeinträchtigt. Es muß deshalb ständig oder periodisch die Filtermasse erneuert werden. Die Regeneration der aus dem Reaktor ausgetragenen schwefelhaltigen Filtermasse, z.B. Kompostmasse, ist problematisch und aufwendig.

Der Erfindung liegt die Aufgabe zugrunde, ein biologisches Reinigungsverfahren vorzusehen, welches speziell für die Abtrennung von Schwefelwasserstoff aus Abgas geeignet ist, welches einen kontinuierlichen Betrieb des biologischen Reaktors gestattet, ohne daß ein festes Reaktorbett ständig umgewälzt werden muß, und bei dem der aus dem Abgas entfernte Schwefel in einer problemlosen, leicht zu handhabenden und leicht aus dem Reaktor auszutragenden Form anfällt.

Die Lösung der Aufgabe ist im Anspruch 1 angegeben. Die Unteransprüche beziehen sich auf vorteilhafte weitere Ausgestaltungen.

Überraschend wurde gefunden, daß der in einem Gas- strom enthaltene Schwefelwasserstoff beim Durchströ- men eines biologischen Reaktors - Rieselbettreaktor oder Blasensäule -, dessen Mikroorganismenkultur befeuchtet sowie mit Nährstoffen und einer definierten Sauerstoffmenge versorgt wird, vorwiegend zu elementarem Schwefel umgewandelt wird. In dieser Form kann der Schwefel mit bekannten Separationsmethoden wie beispielsweise durch Sedimentation aus einem durch den biologischen Reaktor geleiteten Flüssigkeitsstrom abgetrennt werden, so daß weder durch Schwefelwasserstoff bzw. - nach Verbrennung - durch $SO_2$ im Gasstrom noch durch Sulfat im Flüssigkeitsstrom eine Belastung der Umwelt auftritt.

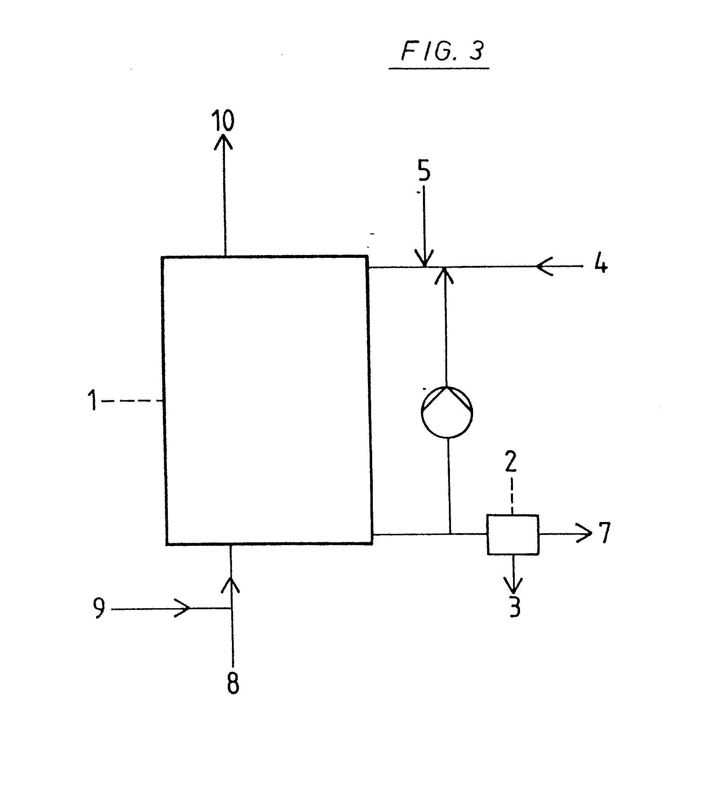

Das erfindungsgemäße Verfahren wird nachfolgend anhand der in den Figuren 1 bis 3 dargestellten Ausführungsbeispiele näher erläutert.

Fig. 1 zeigt ein Fließschema für die Durchführung des erfindungsgemäßen Verfahrens gemäß einer ersten Ausführungsform mit einem Rieselbettreaktor und Abtrennung des Schwefels durch Sedimentation.

Fig. 2 zeigt ein Fließschema einer zweiten Ausführungsform des erfindungsgemäßen Verfahrens, ebenfalls mit einem Rieselbettreaktor und mit separater Abtrennung des Schwefels.

Fig. 3 zeigt das Fließschema einer dritten Ausführungsform des erfindungsgemäßen Verfahrens mit einem Blasensäulenreaktor.

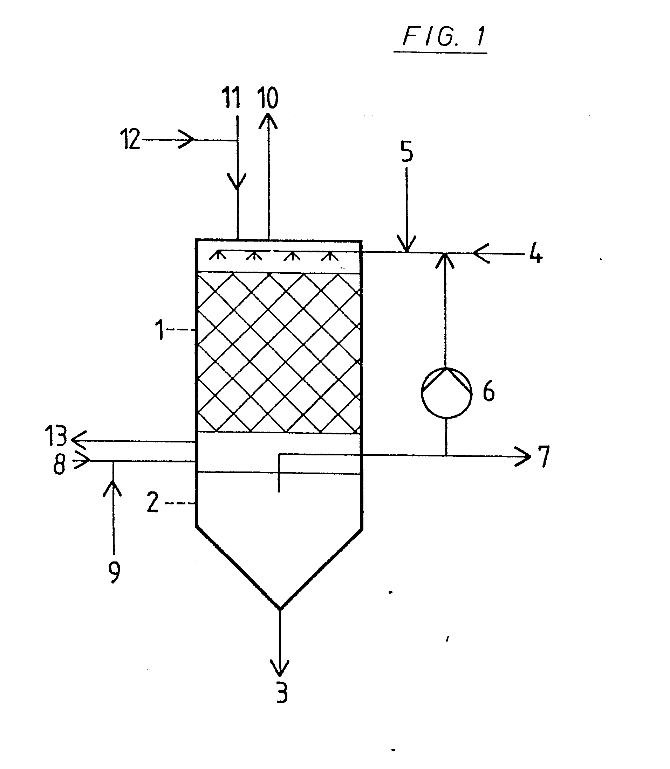

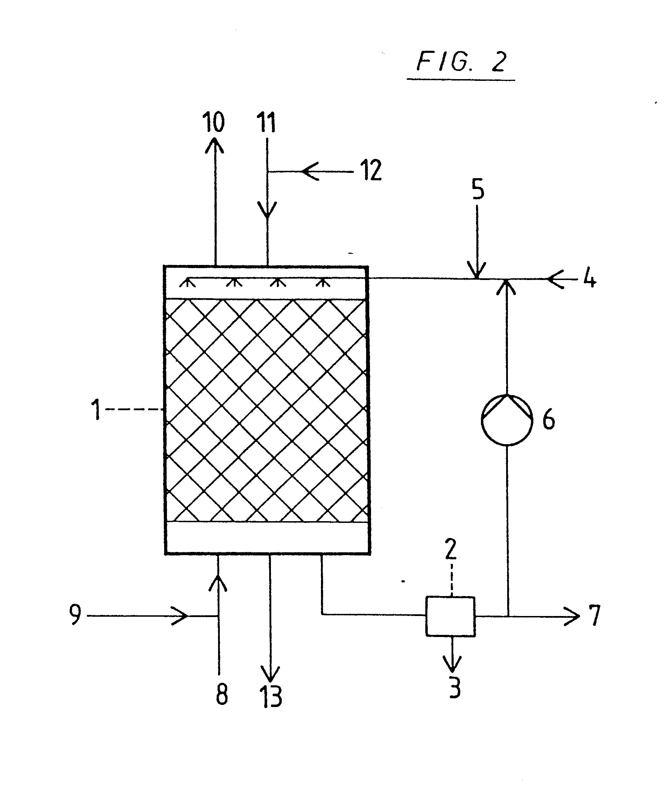

Die Rieselbettreaktoren 1 in Fig. 1 und 2 enthalten eine Füllkörperschüttung möglichst hoher Oberfläche, bevorzugt über 100 $m^2/m^3$, auf der sich ein Mikroorganismenbewuchs bildet. Gleichzeitig ist ein möglichst großes freies Volumen der Füllkörperschüttung - bevorzugt mehr als 60 % - vorteilhaft, um Verstopfungen des Rieselbettes durch den gebildeten Schwefel auszuschließen. Als Füllkörpermaterialien kommen beispielsweise die in biologischen Tropfkörperanlagen eingesetzten PVC-Kunststoffüllkörper in Frage. Besonders geeignet sind auch speziell porös gebrannte Keramikfüllkörper, die sehr günstige Voraussetzungen für eine Mikroorganismenbesiedlung bieten. Auch Aktivkohle kann als Trägermaterial für die Mikroorganismenkulturen eingesetzt werden.

Das Volumen der Füllkörperschüttung wird bestimmt durch die wirksame, mit Mikrooganismen besiedelte Oberfläche des Rieselbettes sowie durch den Volumenstrom des zu reinigenden Gases. Ein besonders vorteilhafter Bereich des auf die Gesamtoberfläche der Füllköprer bezogenen Gasdurchsatzes liegt zwischen 0,01 und 0,1 m³/m²h.

Dem zu reinigenden schwefelwasserstoffhaltigen Gastrom, der im Gegenstrom zum Wasch- und/oder Spülflüssigkeitsstrom von unten (8) bzw. im Gleichstrom zum Wasch- und/oder Spülflüssigkeitsstrom von oben (11) in den biologischen Reaktor (1) geführt wird, wird - falls nicht ausreichend Sauerstoff vorhanden ist - eine für die biologische Oxidation des Schwefelwasserstoffes ausreichende Menge an Sauerstoff, beispielsweise in Form von Luftbeigemischt ((9) bzw. (12)). Die minimal erforderliche Sauerstoffmenge ergibt sich aus der Stöchiometrie der Oxidationsreaktion vom Schwefelwasserstoff zum elementaren Schwefel zu 0,5 mol $O_2$ pro mol Schwefelwasserstoff. Mit Rücksicht auf die Stofftransportvorgänge ist die Sauerstoffmenge aber höher zu wählen, wobei ein vorteilhafter Bereich zwischen 2 mol $O_2$/mol $H_2S$ und 20 mol $O_2$/mol $H_2S$ liegt. Bei einem Schwefelwasserstoffgehalt von 5000 Vol-ppm ergibt sich damit für die Sauerstoffkonzentration im eintretenden Gasstrom ein Bereich von ca. 1 Vol-% bis 10 Vol-%. Vorzugsweise wird ein Bereich von 1,5 bis 3 Vol-% gewählt. Auch bei geringeren Schwefelwasserstoffgehalten ist die Einhaltung dieses Sauerstoffkonzentrationsbereiches im Rohgas zu empfehlen. Der gereinigte Gasstrom tritt im Gegenstrombetrieb oben (10), im Gleichstrombetrieb unten (13) aus dem biologischen Reaktor aus.

In den Rieselbettreaktoren (Zeichnung 1 und 2) wird kontinuierlich oder intermittierend ein Wasch- und/oder Spülflüssigkeitsstrom über die Füllkörperschüttung geleitet, der

- der Befeuchtung der Mikroorganismenkulturen
- der Zufuhr von Nährstoffen und
- dem Ausspülen des gebildeten elementaren Schwefels aus dem Rieselbett dient.

Der Menge und gleichmäßigen Verteilung des Flüssigkeitsstromes kommt große Bedeutung zu, da der Mikroorganismenbewuchs zum einen nicht austrocknen sollte, zum anderen aber ein zu hoher Flüssigkeitsanteil im Rieselbett durch verlängerte Transportwege und Reduzierung der wirksamen Oberfläche die Stoffaustauschbedingungen verschlechtert. Bei trockenen Gasen liegt der Bereich der Flüssigkeitsströmung vorteilhafterweise zwischen 0,1 und 20, besonders bevorzugt zwischen 0,2 und 5 l Flüssigkeit/m³ Gas.

Bei flüssigkeitsgesättigten oder kondensathaltigen Gasströmen kann auf einen Flüssigkeitsstrom zur Feuchthaltung des Mikroorganismenrasens teilweise ganz verzichtet werden.

Neben der Befeuchtung dient der Flüssigkeitsstrom der Zufuhr von Nährstoffen und Spurenelementen, beispielsweise von Phosphor. Außerdem können die Mikroorganismenkulturen anstelle einer Sauerstoffzufuhr mit dem Gasstrom über die Spülflüssigkeit mit der erforderlichen Menge an Oxidationsmittel, beispielsweise in Form von Wasserstoffperoxid, versorgt werden.

Eine wesentliche Aufgabe des Flüssigkeitsstromes ist die Auswaschung des im Rieselbett gebildeten elementaren Schwefels, die entweder kontinuierlich durch die Spülflüssigkeit oder intermittierend zu definierten Waschzyklen erfolgen kann. Die Abtrennung des elementaren Schwefels aus dem Flüssigkeitsstrom kann entweder in einer im Rieselbettreaktor angeordneten Sedimentationszone (2) mit Schwefelabzug (3) durchgeführt werden - wie aus Zeichnung 1 ersichtlich - oder in einer gesonderten Trennstufe (2) - wie in Zeichnung 2 dargestellt. Als Separationsstufe kommt hierbei beispielsweise neben der Sedimentation ein Hydrozyklon in Frage.

Die Spül- und/oder Waschflüssigkeit kann entweder über den Zulauf (4) und den Ablauf (7) in einmaligem Durchgang durch den Rieselbettreaktor geführt werden oder es wird über die Pumpe (6) ein Flüssigkeitskreislauf aufrechterhalten. Nährstoffe, Spurenelemente sowie gegebenenfalls Oxidationsmittel können dem Flüssigkeitszulauf zudosiert werden (5).

Da der optimale pH-Bereich für die biologische Oxidation von Schwefelwasserstoff zu elementaren Schwefel zwischen pH 5 und pH 9, besonders bevorzugt zwischen pH 6,8 und pH 7,5 liegt, kann über (5) auch eine Korrektur des pH-Wertes der zulaufenden oder im Kreislauf geführten Spül- und/oder Waschflüssigkeit z.B. mittels Natronlauge erfolgen.

Als Spül- und/oder Waschflüssigkeit können beliebige Wasser- bzw. Abwasserströme genutzt werden wie beispielsweise Flußwasser, Brauch- oder Trinkwasser - hier ist die Zumischung mineralischer Nährstoffe erforderlich - sowie Abwässer aus biologischen Abwasserbehandlungsanlagen. Beispielsweise ist es beim Einsatz des Verfahrens zur Schwefelwasserstoffentfernung aus Biogasen, wie sie bei der anaeroben Schlammstabilisierung gebildet werden, äußerst vorteilhaft, unmittelbar das Trübwasser aus der anaeroben Stufe zu verwenden, das sämtliche für die Mikroorganismenpopulation erforderlichen Nährstoffe und Spurenelemente enthält und in ausreichender Menge kostenfrei zur Verfügung steht. Ebenso kann z.B. nach Vorklärung der Abwasserzulauf einer Kläranlage oder der Ablauf aus dem aeroben Belebungsbecken einer biologischen Abwasserbehandlungsanlage für das erfindungsgemäße Verfahren als Spül- und/oder Waschflüssigkeit verwendet werden.

Um die Anfahrphase des biologischen Rieselbettreaktors zu verkürzen, ist ein Animpfen des Spül- und/oder Waschwassers beispielsweise mit Klärschlamm aus kommunalen Abwasserreinigungsanlagen zu empfehlen.

Anstelle eines Rieselbettes kann - wie in Zeichnung 3 dargestellt - auch ein Blasensäulenreaktor (1) zur biologischen Oxidation von in Gasgemischen enthaltenem Schwefelwasserstoff zu elementarem Schwefel eingesetzt werden.

Dem zu reinigenden Gasgemisch (8) wird - falls erforderlich - Sauerstoff, bevorzugt in Form von Luft zugemischt (9), bevor es feinverteilt in den Blasensäulenreaktor (1) eintritt. Nach Durchströmen der im Reaktor enthaltenen Belebtschlammsuspension mit Trockensubstanzgehalten bevorzugt zwischen 10 und 100 g TS/l, besonders bevorzugt zwischen 60 und 80 g TS/l, tritt das Gasgemisch aus dem Blasensäulenreaktor aus (10).

Über einen Kreislauf (6) kann dem Blasensäulenreaktor die zur Aufrechterhaltung des optimalen pH-Bereiches - zwischen pH 5 und pH 9, besonders bevorzugt zwischen pH 6,8 und pH 7,5 - erforderliche Menge an Neutralisationsmittel und - analog zum Rieselbettreaktor - ein Oxidationsmittel wie $H_2O_2$ zudosiert werden. Ein Teil der Belebtschlammsuspension wird in eine Trennstufe (2), z.B. eine Sedimentation geführt, aus der der im Blasensäulenreaktor gebildete elementare Schwefel gemeinsam mit dem abgeschiedenen Schlamm abgezogen werden kann (3), während die weitgehend feststofffreie Flüssigkeit abströmt (7). Die entnommene Schlammmenge muß durch eine Schlammsuspension, die auf den im Blasensäulenreaktor vorhandenen Trockensubstanzgehalt eingedickt ist, ergänzt werden (4). Als Schlammreservoir kommen beispielsweise die in kommunalen und industriellen biologischen Abwasserreinigungsanlagen in aeroben und anaeroben Stufen gebildeten Überschußschlämme in Frage.

Die Effizienz der Schwefelwasserstoffoxidation zu elementarem Schwefel im Blasensäulenreaktor kann durch Zugabe von Trägermaterialien wie z.B. Aktivkohle, auf denen sich die Mikroorganismen ansiedeln, erhöht werden.

Da die Stoffübergangsbedingungen in einem Blasensäulenreaktor weniger günstig sind als in einem Rieselbettreaktor und zudem ein Teil des Oxidationsmittels von der Bakteriensuspension zum Abbau organischer Stoffe gezehrt wird, ist eine höhere Oxidationsmittelmenge - eingebracht entweder über den Gasstrom, bevorzugt in Form von Luft oder über den Schlammkreislauf, bevorzugt in Form von $H_2O_2$ - als beim Rieselbettreaktor erforderlich. Als besonders geeignetes Molenverhältnis von $O_2$ zu $H_2S$ ist im Blasensäulenreaktor ein Bereich zwischen 3 mol $O_2$/mol $H_2S$ und 25 mol $O_2$/mol $H_2S$ anzusehen, womit sich beispielsweise bei einem Schwefelwasserstoffgehalt von 5000 Vol-ppm ein besonders vorteilhafter Sauerstoffgehalt des Rohgases von 1,5 Vol-% bis 12,5 Vol-% ergibt. Eine Einhaltung dieser Sauerstoffkonzentration ist auch bei geringeren Schwefelwasserstoffgehalten des Rohgases vorteilhaft.

Das erfindungsgemäße Verfahren wird sowohl im Rieselbettals auch im Blasensäulenreaktor bevorzugt im Temperaturbereich für mesophile Mikroorganismen, d.h. zwischen 20 °C und 45 °C betrieben, kann aber nach entsprechender Adaptionsphase des Mikroorganismenkulturen auch in den Temperaturbereichen von 0 °C bis 20 °C und von 45 °C bis 75 °C erfolgreich eingesetzt werden.

Beispiel 1

In einer kommunalen Kläranlage wird ein Biogasstrom von 50 $m^3_N$/h mit folgender mittleren Zusammensetzung

- $CH_4$    70 Vol-%

- $CO_2$    28 Vol-%

- $H_2S$ 7000 Vol-ppm

in einem Rieselbettreakotr mit einer Füllkörperschüttung von 5 $m^3$ Volumen behandelt. Als Füllkörper finden aus der Tropfkörpertechnik bekannte zylindrische PVC-Schüttmaterialien mit 50 mm Durchmesser, 50 mm Länge und einer spezifischen Oberfläche von 150 $m^2$/$m^3$ Verwendung. Der Leerraumanteil der Schüttung beträgt 96,5 %.

Vor Eintritt in den mit Klärschlamm angeimpften Rieselbettreaktor wird dem Biogas Luft in einem Anteil von 15 Vol-% zugemischt.

Als Spülflüssigkeit wurde zunächst das aus dem Faulturm der Kläranlage ablaufende Trübwasser genutzt, das kontinuierlich mit 1 $m^3$/h - dies entspricht einem auf den Gasstrom bezogenen Flüssigkeitsdurchsatz von 17 l/$m^3_{Gas}$ - das Rieselbett im Gegenstrom zum Biogas durchströmte. Am Austritt aus dem Rieselbettreaktor wies das Gas folgende Zusammensetzung auf:

- $CH_4$    60 Vol-%

- $CO_2$    24 Vol-%

- $N_2$     13 Vol-%

- $O_2$      2 Vol-%

- $H_2S$    200 Vol-ppm

Bezogen auf den ursprünglichen Schwefelwasserstoffgehalt des Biogases bedeutet dies eine Reinigungsleistung von 97 %.

Es zeigte sich, daß die Reinigungsleistung bezüglich Schwefelwasserstoff unabhängig von der Art der Spülflüssigkeit - es wurde Trübwasser aus dem Faulturm der Kläranlage und vorgeklärtes Kommunalabwasser verwendet - und unabhängig davon, ob die Spül- und/oder Waschflüssigkeit nur einmal das Rieselbett durchströmt oder im Kreislauf geführt wird, in der Größenordnung zwischen 96 % und 98 % lag. Bei kondensathaltigen Biogasströmen konnte der Spülflüssigkeitsstrom sogar mehrtägig unterbrochen werden, ohne daß die biologische Schwefelwasserstoffoxidation zu vorwiegend elementarem Schefel signifikant beeinflußt wurde.

Mindestens ca. 80 % des im Rieselbettreaktor aus dem Gasstrom abgetrennten Schwefels konnten als elementarer Schwefel mittels der Spül- und/oder Waschflüssigkeit aus dem Reaktor ausgetragen werden.

Beispiel 2

Einem Biogasstrom von 15 $l_N$/h mit folgender Zusammensetzung

- $CH_4$   70 Vol-%

- $CO_2$   28 Vol-%

- $H_2S$ 7000 Vol-ppm

wurden 10 $l_N$/h Luft zugemischt, bevor das Gasgemisch über eine am Reaktorboden angeordnete Glasfritte einem Labor-Blasensäulenreaktor von 6 l Volumen zugeführt wurde.

Der Reaktor enthielt 5 l einer aus der Nacheindickung einer an aerob-biologischen Stufe entnommenen Belebtschlammsuspension mit einem Trockensubstanzgehalt von 50 g TS/l.

Der aus dem Blasensäulenreaktor austretende Reingasstrom wies folgende Zusammensetzung auf:

- $CH_4$    42 Vol-%

- $CO_2$    16 Vol-%

- $N_2$     32 Vol-%

- $O_2$      7 Vol-%

- $H_2S$   500 Vol-ppm.

Bezüglich Schwefelwasserstoff ergab sich somit - unter Berücksichtigung des Verdünnungseffektes durch die zugemischte Luft - ein Reinigungsgrad von 86 %.

Nach Zumischung von 2 g/l pulverisierter Aktivkohle zu der Belebtschlammsuspension reduzierte sich der Schwefelwasserstoffgehalt des aus dem Blasensäulenreaktor austretenden Reingasstromes nach mehrtägiger Einlaufphase, in der sich eine teilweise Besiedlung der Aktivkohle mit Mikroorganismen einstellte, von 500 Vol-ppm auf 200 Vol-ppm. Dies entspricht bei Berücksichtigung der Verdünnung durch die zugemischte Luft einer Reinigungsleistung von 94 Vol-%. Auch in diesem Beispiel hatte der aus dem Gasstrom abgetrennte Schwefel zu mindestens ca. 80 % die Form von elementarem Schwefel, der Rest von gelöstem Sulfat, und konnte durch periodisches Abziehen von Trägerflüssigkeit aus dem Reaktor entfernt werden.

- 1 -

Imhausen-Chemie GmbH                                    WM/dl
D-7630 Lahr/Schwarzwald


P a t e n t a n s p r ü c h e


1.   Verfahren zum Entfernen von Schwefelwasserstoff aus Abgas, insbesondere aus einem von anaeroben Prozessen stammenden Faulgas oder Biogas, bei
dem das Abgas durch einen biologischen Reaktor geleitet und der Schwefelwasserstoff durch die
Stoffwechseltätigkeit von in dem Reaktor vorhandenen Mikroorganismen umgesetzt wird,
dadurch  g e k e n n z e i c h n e t , daß
dem Reaktor gleichzeitig mit dem Abgas Sauerstoff in
einer Menge zugeführt wird, die größer ist als die
Sauerstoffmenge, die zur Oxidation des aus dem Abgas zu entfernenden Schwefelwasserstoff zu elementarem Schwefel stöchiometrisch erforderlich ist,
daß der Schwefelwasserstoff im Reaktor mittels
der Mikroorganismen zu  elementarem Schwefel und/
oder zu einer in Wasser löslichen Schwefel-Sauerstoff-Verbindung oxidiert wird,
und daß der elementare Schwefel bzw. die gelöste
Schwefel-Sauerstoff-Verbindung mittels Flüssigkeit
aus dem Reaktor ausgetragen wird.

2.    Verfahren nach Anspruch 1, dadurch  g e k e n n -
z e i c h n e t , daß der Sauerstoff dem dem Reaktor
zuzuführenden Abgas beigemischt wird, insbesondere durch
Beimischen von Luft.

3.    Verfahren nach Anspruch 1, dadurch  g e k e n n -
z e i c h n e t , daß der Sauerstoff mittels einer dem
Reaktor zusätzlich zum Abgas ständig zugeführten Flüssigkeit zugeführt wird, die den Sauerstoff oder eine oxidierende Verbindung, insbesondere Wasserstoffperoxid. gelöst enthält.

4.    Verfahren nach Anspruch 1, dadurch  g e k e n n z e i c h -
n e t , daß die Mikroorganismen an einer festen Reaktorfüllung, insbesondere in Form einer Füllkörperschüttung,
angesiedelt sind, und daß die Reaktorfüllung ständig von
dem Abgas sowie ständig oder zeitweise von einer Nähr-
und/oder Spülflüssigkeit nach Art eines Tropfkörpers durchströmt wird.

5.    Verfahren nach Anspruch 4, dadurch  g e k e n n -
z e i c h n e t , daß die zugeführte Sauerstoffmenge so
eingestellt ist, daß der Schwefelwasserstoff im wesentlichen zu  elementarem  Schwefel oxidiert wird und daß der
elementare Schwefel durch Abspülen von den Füllkörpern
mittels der Nähr- und/oder Spülflüssigkeit aus dem Reaktor
ausgetragen wird.

- 3 -

6. Verfahren nach Anspruch 1, dadurch g e k e n n - z e i c h n e t , daß die Mikroorganismen in dem Reaktor in Form einer Belebtschlammsuspension in einer Trägerflüssigkeit vorliegen, in welche das Abgas eingeblasen wird.

7. Verfahren nach Anspruch 6 , dadurch g e k e n n - z e i c h n e t , daß die Sauerstoffmenge so eingestellt wird, daß der Schwefelwasserstoff ganz oder überwiegend zu elementarem Schwefel oxidiert wird und aus dem Reaktor durch ständiges oder periodisches Abziehen von Trägerflüssigkeit entfernt wird.

8. Verfahren nach Anspruch 1, d a d u r c h g e - k e n n z e i c h n e t, daß soviel Sauerstoff zugeführt wird , daß das Molverhältnis von $O_2$ zu $H_2S$ zwischen 2 und 25 mol $O_2$/mol $H_2S$ liegt.

9. Verfahren nach Anspruch 1, d a d u r c h g e - k e n n z e i c h n e t, daß der Sauerstoffgehalt des zu reinigenden Gasstromes zwischen 1 und 12,5Vol-% eingestellt wird.

10. Verfahren nach Anspruch 1, d a d u r c h g e - k e n n z e i c h n e t, daß der biologische Reaktor in einem Temperaturbereich zwischen 0 °C und 75 °C vorzugsweise ⌊zwischen⌋ 20 °C und 45 °C betrieben wird.

11. Verfahren nach Anspruch 4, d a d u r c h g e - k e n n z e i c h n e t, daß der auf die Füllkörperoberfäche bezogene Gasdurchsatz zwischen 0,01 $m^3/m^2h$ und 0,1 $m^3/m^2h$ liegt, und ein Wasch- und/oder Spülflüssigkeitsstrom in einer Menge zwischen 0,2 $l/m^3$ Gas und 20 $l/m^3$ Gas bezogen auf 1 $m^3$ des zu reinigenden Gases zugeführt wird.

β

*FIG. 1*

73

FIG. 2

0224889

*FIG. 3*